**Europäisches Patentamt**

**European Patent Office**

**Office européen des brevets**

(11) Veröffentlichungsnummer: **0 168 829**

**A1**

# EUROPÄISCHE PATENTANMELDUNG

(21) Anmeldenummer: 85108958.1

(22) Anmeldetag: 17.07.85

(51) Int. Cl.⁴: **H 04 L 25/03**, H 04 L 11/15

(30) Priorität: 20.07.84 DE 3426887

(43) Veröffentlichungstag der Anmeldung: 22.01.86
Patentblatt 86/4

(84) Benannte Vertragsstaaten: AT CH DE LI NL SE

(71) Anmelder: **Siemens Aktiengesellschaft, Berlin und München Wittelsbacherplatz 2, D-8000 München 2 (DE)**

(72) Erfinder: **Schierenbeck, Friedrich, Dipl.-Ing., Am Drudenbogen 9, D-8080 Fürstenfeldbruck (DE)**
Erfinder: **Dieter, Georg, Dipl.-Ing., Reichertshausen 1, D-8195 Egling 2 (DE)**
Erfinder: **Finck, Herbert, Dipl.-Ing., Stobäusstrasse 18, D-8190 Wolfratshausen (DE)**

(54) **Schaltungsanordnung zur Steuerung der Inbetriebsetzung bzw. Wiederinbetriebsetzung zweier Datenübertragungseinrichtungen.**

(57) Zur Steuerung der Inbetriebsetzung bzw. der Wiederinbetriebsetzung zweier Datenübertragungseinrichtungen (A, B), die jeweils über eine Modem-Einheit (MOD) miteinander zu verbinden bzw. verbunden sind, die mit Datensignale abgebenden/aufnehmenden Datengeräten jeweils über eine Übertragungssteuereinrichtung (DUE) an ihrer zugehörigen Modem-Einheit (MOD) angeschlossen sind, dient ein gesondertes Einstellsignal, welches in der dieses Signal aufnehmenden Datenübertragungseinrichtung zur Einstellung eines insbesondere adaptiv arbeitenden Entzerrers dient. In zumindest einer der beiden zu verbindenden bzw. verbundenen Datenübertragungseinrichtungen wird bei Ausfall des Synchronisationszustands ein Einstellsignal lediglich während einer vorgegebenen Zeitspanne an die andere Datenübertragungseinrichtung abgegeben. Nach Ablauf der Zeitspanne wird mit der Übertragung von den Sychronisationszustand anzeigenden Signalen, insbesondere Datensignalen, begonnen.

Siemens Aktiengesellschaft
Berlin und München

Unser Zeichen
VPA
84 P 1 5 2 3 E

Schaltungsanordnung zur Steuerung der Inbetriebsetzung
bzw. der Wiederinbetriebsetzung zweier Datenübertragungseinrichtungen.

Die Erfindung bezieht sich auf eine Schaltungsanordnung
zur Steuerung der Inbetriebsetzung bzw. der Wiederinbetriebsetzung zweier miteinander zu verbindenden bzw.
bereits verbundener Datenübertragungseinrichtungen, die
jeweils über eine Modem-Einheit miteinander zu verbinden
bzw. verbunden sind und die mit Datensignale abgebenden/
aufnehmenden Datengeräten jeweils über eine Übertragungssteuereinrichtung an ihrer zugehörigen Modem-Einheit angeschlossen sind, mittels eines gesonderten Einstellsignals, welches in der dieses Einstellsignal aufnehmenden Datenübertragungseinrichtung zur Einstellung
eines insbesondere adaptiv arbeitenden Entzerrers
dient.

Bei Schaltungsanordnungen der vorstehend bezeichneten
Art ist häufig die jeweilige Modem-Einheit über eine
Schnittstelle gemäß der CCITT-Empfehlung V.24 mit Datenendeinrichtungen, wie z.B. mit Rechnern, verbunden.Dabei
wird die Inbetriebnahme bzw. Wiederinbetriebnahme derartiger Schaltungsanordnungen üblicherweise durch die
jeweilige Datenendeinrichtung veranlaßt, da diese über
die Betriebsmittel und die Software verfügt, die
erforderlich sind, um einen eine Inbetriebsetzung bzw..
eine Wiederinbetriebsetzung der Datenübertragung
fordernden bzw. anzeigenden Zustand zu erkennen.

19.7.84 /Nt 1 kel

Die betreffende Inbetriebsetzung bzw. Wiederinbetriebsetzung ist jedoch in dem Fall nicht möglich, daß Datenendeinrichtungen ohne die geschilderten Leistungsmerkmale verwendet werden und/oder daß handelsübliche Modem-Bausteine mit digitalen Übertragungseinrichtungen verwendet werden, die nicht über Betriebsmittel der zuvor erwähnten Art verfügen.

Der Erfindung liegt demgemäß die Aufgabe zugrunde, einen Weg zu zeigen, wie eine Schaltungsanordnung der eingangs genannten Art auszubilden ist, um bei relativ geringem schaltungstechnichen Aufwand die Inbetriebsetzung bzw. die Wiederinbetriebsetzung zweier miteinander zu verbindender bzw. bereits verbundener Datenübertragungseinrichtungen zu gewährleisten, die ohne gesonderte Schaltungsmittel für die Einleitung bzw. Wiedereinleitung von Datenübertragungsvorgängen sind.

Gelöst wird die vorstehend aufgezeigte Aufgabe bei einer Schaltungsanordnung der eingangs genannten Art erfindungsgemäß dadurch, daß in zumindest einer der beiden miteinander zu verbindenden bzw. verbundenen Datenübertragungseinrichtungen der Ausfall des Synchronisationszustandes infolge einer fehlenden oder gestörten Datensignalübertragung von der jeweils anderen Datenübertragungseinrichtung her dazu herangezogen wird, das betreffende Einstellsignal lediglich während einer vorgegebenen Zeitspanne an die andere Datenübertragungseinrichtung abzugeben und nach Ablauf der betreffenden Zeitspanne mit der Übertragung von den Synchronisationszustand anzeigenden Signalen, insbesondere Datensignalen, zu beginnen, und daß die betreffende andere Datenübertragungseinrichtung entweder nach Ablauf einer der genannten Zeitspanne entsprechenden Zeitspanne oder nach Empfang der den Synchronisationszustand anzeigenden Signale von der genannten einen Datenübertragungseinrichtung her mit der Übertragung von den Synchronisationszustand anzeigenden Signalen, insbesondere von Datensignalen, an die genannte eine Datenübertragungseinrichtung beginnt.

Die Erfindung bringt den Vorteil mit sich, daß mit einem insgesamt relativ geringen schaltungstechnischen Aufwand ausgekommen werden kann, um zwei Datenübertragungseinrichtungen, die miteinander zu verbinden bzw. bereits verbunden sind, für eine Datenübertragung in Betrieb zu setzen bzw. wieder in Betrieb zu setzen, ohne daß in den betreffenden Datenübertragungseinrichtungen selbst für die Steuerung derartiger Vorgänge bereits entsprechende Steuerschaltungen bzw. Betriebsmittel vorzusehen sind. Dies bedeutet, daß in vorteilhafter Weise einfache Datenübertragungseinrichtungen bzw. diese bildende Geräte verwendet werden können.

Zweckmäßigerweise ist an einem bei Fehlen des Synchronisationszustandes ein bestimmtes Ausgangssignal abgebenden Signalausgang einer Übertragungssgteuereinrichtung zumindest einer der beiden jeweils eine Übertragungssteuereinrichtung und eine Modem-Einheit aufweisenden Datenübertragungseinrichtungen der Setzeingang eines bistabilen Kippgliedes angeschlossen, welches ausgangsseitig an einem Steuereingang der zugehörigen Modemeinheit angeschlossen ist, die auf ihre Ansteuerung an dem betreffenden Steuereingang hin mit der Abgabe des genannten Einstellsignals beginnt, und daß die Modem-Einheit mit einem auf die erfolgreiche Beendigung eines Einstellvorgangs in der anderen Datenübertragungseinrichtung ein bestimmtes Ausgangssignal abgebenden Ausgang über eine Zeitschaltung am Rücksetzeingang des bistabilen Kippgliedes angeschlossen ist.
Hierdurch ergibt sich der Vorteil eines besonders geringen schaltungstechnischen Aufwands für die Steuerung
der Inbetriebsetzung bzw. Wiederinbetriebsetzung
zweier miteinander verbindender bzw. bereits verbundener Datenübertragungseinrichtungen. Durch die Verwendung der erwähnten Zeitschaltung - die in wenigsens
einer der beiden Datenübertragungseinrichtungen vorhanden bzw. wirksam ist - gelingt es in vorteilhafter
Weise, eine Blockierung der beiden Datenübertragungseinrichtungen im Falle der Inbetriebsetzung bzw. Wiederinbetriebsetzung zu vermeiden, wie dies weiter unten
noch näher ersichtlich werden wird.

Zweckmäßigerweise liegt zwischen dem Signalausgang der
genannten Übertragungssteuereinrichtung und dem Setzeingang des bistabilen Kippgliedes ein Sperrglied mit
seinem nichtinvertierenden Eingang bzw. mit seinem Ausgang, und der invertierende Eingang des betreffenden
Sperrgliedes ist am Ausgang der Zeitschaltung angeschlossen. Hierdurch ergibt sich der Vorteil eines besonders geringen schaltungstechnischen Aufwands für die
Ansteuerung des genannten bistabilen Kippgliedes.

Vorzugsweise ist der Signalausgang der genannten Übertragungssteuereinrichtung mit dem genannten Steuereingang der Modem-Einheit direkt verbindbar. Durch diese
Maßnahme ergibt sich der Vorteil eines ganz besonders
geringen schaltungstechnischen Aufwands in einer der
beiden miteinander verbundenen bzw. zu verbindenden Datenübertragungseinrichtungen.

Der Signalausgang der genannten Übertragungssteuereinrichtung ist zweckmäßigerweise mit einem auf seine

0 168 829

Ansteuerung einen Einstellbetrieb mit einer ersten oder einer davon verschiedenen zweiten Rate bewirkenden gesonderten Steuereingang der zugehörigen Modem-Einheit verbunden. Durch diese Maßnahme kann in vorteilhafter Weise die Datenübertragung zwischen den beiden miteinander verbundenen bzw. zu verbindenden Datenübertragungseinrichtungen mit einer ersten oder einer davon verschiedenen zweiten Rate erfolgen, nachdem zuvor in den betreffenden Datenübertragungseinrichtungen die vorhandenen Entzerrer, die insbesondere adaptiv arbeitende Entzerrer sind, mit der einen oder der anderen Rate eingestellt worden sind.

Der gerade genannte gesonderte Steuereingang der Modem-Einheit kann im übrigen mit einem bei Vorliegen eines bestimmten Mindestpegels auf einer Signale zu der betreffenden Modem-Einheit übertragenden Übertragungsleitung ein bestimmtes Ausgangssignal führenden Pegel-Überwachungsausgang der betreffenden Modem-Einheit verbunden sein. Durch diese Maßnahme wird der Vorteil erzielt, daß eine Datenübertragung erst dann freigegeben wird, wenn das Vorliegen eines ausreichenden Pegels auf der erwähnten Übertragungsleitung festgestellt worden ist.

An dem erwähnten Pegelüberwachungsausgang der Modem-Einheit kann ferner der eine Eingang eines zwei Eingänge und einen Ausgang aufweisenden UND-Gliedes angeschlossen sein, welches mit seinem anderen Eingang an einem der Modem-Einheit zugeführte Signale abgebenden Signalausgang der betreffenden Modem-Einheit und mit seinem Ausgang an einem Signaleingang der zugehörigen Überwachungssteuereinrichtung angeschlossen ist. Durch diese Maßnahme ergibt sich der Vorteil, daß die Datensignalaufnahme in der betrachteten Datenübertragungseinrichtung vom Vorliegen eines ausreichenden Pegels auf der die betreffenden Datensignale zuführenden Übertragungsleitung abhängig gemacht ist, so daß sichergestellt ist, daß nur einen ausreichenden Pegel aufweisende Datensignale (ordnungsgemäß auftretende Datensignale) aufgenommen werden.

Anhand von Zeichnungen sei die Erfindung nachstehend beispielsweise näher erläutert.

FIG 1 zeigt in einem Blockschaltbild zwei Datenübertragungseinrichtungen, die über eine Übertragungsstrecke miteinander verbunden sind.

FIG 2 zeigt in einem Blockschaltbild den möglichen Aufbau einer der in FIG 1 dargestellten Datenübertragungseinrichtungen.

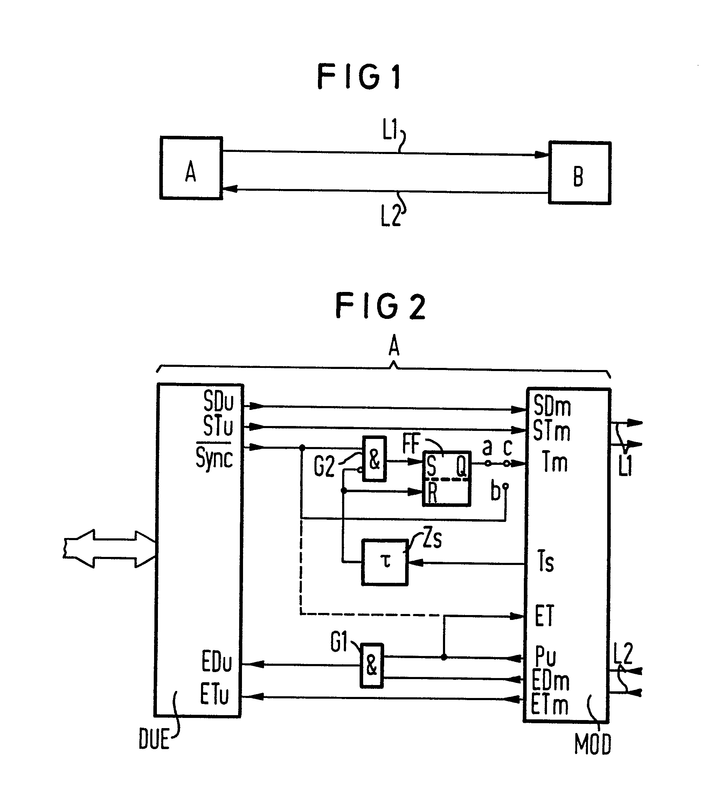

FIG 1 zeigt in einem Blockschaltbild zwei Datenübertragungseinrichtungen A und B, die über eine Übertragungsstrecke miteinander verbunden sind, zu der die Übertragungsleitungen L1 und L2 gehören. Jede dieser beiden Übertragungsleitungen ist eine Zweidraht-Übertragungsleitung, die Signale nur in einer Übertragungsrichtung zu übertragen gestattet. Die jeweilige Signalübertragungsrichtung ist durch Pfeile an den betreffenden Übertragungsleitungen L1, L2 angedeutet. Es dürfte einzusehen sein, daß die beiden Datenübertragungseinrichtungen A und B nicht nur direkt über die in FIG 1 dargestellte Übertragungsstrecke miteinander verbunden sein müssen, sondern daß sie durchaus auch über Vermittlungsstellen miteinander verbunden sein können.

FIG 2 zeigt in einem Blockschaltbild den möglichen Aufbau einer der beiden in FIG 1 angedeuteten Datenübertragungseinrichtungen. Unter Berücksichtigung der Signalübertragungseinrichtungen auf den Übertragungsleitungen

L1 und L2 handelt es sich bei der in FIG 2 dargestellten
Datenübertragungseinrichtung um die in FIG 1 mit A angedeutete Datenübertragungseinrichtung.

Die in FIG 2 dargestellte Datenübertragungseinrichtung
umfaßt zum einen eine digitale Übertragungseinrichtung
DUE, die auf ihrer in FIG 2 links liegenden Seite mit
Datenendeinrichtungen, wie einem Multiplexer, einem
Datenanschaltgerät usw. verbunden sein mag .oder die
selbst eine Datenendeinrichtung sein kann. Zu der in
FIG 2 dargestellten Datenübertragungseinrichtung gehört
ferner eine Modem-Einheit MOD, welche zwischen der
digialen Übertragungseinrichtung DUE und der Übertragunmgsstrecke mit den beiden Zweidraht-Übertragungsleitungen L1 und L2 vorgesehen ist. Diese Modem-Einheit
mag beispielsweise für eine Signalübertragung mit einer
Übertragungsrate von 9600 bit/s ausgelegt sein. Es ist
aber auch ohne weiteres möglich, daß die betreffende
Modem-Einheit MOD für unterschiedliche Übertragungsraten einsetzbar ist.In jedem Falle weist die betreffende
Modem-Einheit MOD in ihrem mit der Zweidraht-Übertragungsleitung L2 verbundenen Empfangsbereich einen insbesondere adaptiv arbeitenden Entzerrer auf, mit dessen
Hilfe eine Entzerrung der über die Zweidraht-Übertragungsleitung L2 jeweils zugeführten Signale vornehmbar
ist.
Die in FIG 2 dargestellte digitale Übertragungseinrichtung DUE weist einen Sendedatenausgang SDu, einen Taktausgang STu und einen Steuerausgang $\overline{Sync}$ auf. Über den
Sendedatenausgang SDu gibt die digitale Übertragungseinrichtung DUE ihr zugeführte Datensignale an einen Sendedateneingang SDm der zugehörigen Modem-Einheit MOD ab.
Die an dem Taktausgang STu der digitalen Übertragungseinrichtung DUe auftretenden Taktinformationen bzw. Taktimpulse werden einem Takteingang STm der zugehörigen Modem-Einheit zugeführt. An dem Steuerausgang $\overline{\text{Sync}}$ der digitalen Übertragungseinrichtung DUE tritt bei Ausfall des Synchronisationszustands in der betrachteten Datenübertragungseinrichtung ein bestimmtes Anzeigesignal auf, welches im vorliegenden Fall durch ein "1"-Signal gebildet ist. Der Ausfall des Synchronisationszustands liegt dann vor, wenn die betrachtete, in FIG 2 dargestellte Datenübertragungseinrichtung von der mit ihr verbundenen Datenübertragungseinrichtung keine ordnungsgemäßen Signale (Datensignale) zugeführt erhält – also die Verbindung zwischen den beiden miteinander verbundenen Datenübertragungseinrichtungen gestört ist. Der Synchronisationszustand liegt andererseits auch dann nicht vor, wenn die Verbindung zwischen der betrachteten Datenübertragungseinrichtung und einer weiteren Datenübertragungseinrichtung erst herzustellen ist, also die beiden Datenübertragungseinrichtungen erst in Betrieb zu setzen sind.

In der Modem-Einheit MOD werden auf die von der zugehörigen digitalen Übertragungseinrichtung DUE her zugeführten Datensignale und Taktsignale bzw. -impulse hin für die Übertragung auf der Zweidraht-Übertragungsleitung Ll in Frage kommende Signale gebildet. Diese Vorgänge betreffen den eigentlichen Sendebereich bzw. Modulationsbereich der Modem-Einheit; auf die betreffenden Vorgänge wird hier nicht weiter eingegangen werden.

Neben den zuvor betrachteten Anschlüssen weisen die digitale Übertragungseinrichtung DUE und die Modem-Einheit MOD noch weitere Anschlüsse auf. Zu diesen weiteren Anschlüssen gehören ein Empfangsdatenausgang EDm und ein Empfangstaktausgang ETm in der Modem-Einheit MOD. Zu den betreffednden weiteren Anschlüssen gehören in der digitalen Übertragungseinrichtung DUE ein Empfangsdateneingang EDu und ein Empfangstakteingang ETu. Der Empfangstakteingang ETm der digitalen Übertragungseinrichtung DUE ist mit dem Empfangstaktausgang ETm der
zugehörigen Modem-Einheit MOD direkt verbunden. Der
Empfangsdateneingang EDu der digitalen Übertragungseinrichtung DE ist indessen mit dem Ausgang eines
Verknüpfungsgliedes G1 verbunden, welches durch ein
UND-Glied gebildet ist, das mit einem Eingang an dem
Empfangsdatenausgang EDm und mit einem weiteren Eingang
an einem Ausgang Pu der zugehörigen Modem-Einheit MOD
angeschlossen ist. Bei dem Ausgang Pu der Modem-Einheit MOD handelt es sich um einen sogenannten Pegelüberwachungsausgang, der dann ein bestimmtes Ausgangssignal, nämlich im vorliegenden Fall ein "1"-Ausgangs-
signal abgibt, wenn der Pegel der über die Zweidraht-
Übertragungsleitung L2 der betreffenden Modem Einheit
MOD zugeführten Signale einen bestimmten vorgegebenen
Wert überschreitet. Damit werden der Modem-Einheit MOD
über die Zweidraht-Übertragungsleitung L2 zugeführte
Signale nur dann zu der zugehörigen digitalen Übertragungseinrichtung DUE weitergeleitet - und zwar über
das UND-Glied G1 - wenn die betreffenden Signale mit
einem den vorgegebenen Pegelwert überschreitenden Pegel
auftreten.

Zwischen der digitalen Übertragungseinrichtung, zwischen
der und einem oder mehreren Datenendgeräten Signale in
beiden Übertragungsrichtungen übertragbar sind, und der
zugehörigen Modem-Einheit MOD ist eine Schaltungsanordnung vorgesehen, die nunmehr näher beschrieben werden
wird. Zu dieser Schaltungsanordnung gehört ein Sperrglied G2, welches mit seinem nictinvertierenden Signaleingang an dem Steuerausgang $\overline{Sync}$ der digitalen Übertragungseinrichtung DUE angeschlossen ist. Der Ausgang
des betreffenden Sperrgliedes G2 ist am Setzeingang S
eines bistabilen Kippgliedes FF angeschlossen, welches
mit seinem im Setzzustand ein "1"-Signal führenden
Q-Ausgang an einem Eingangsanschluß Tm der Modem-Einheit MOD angeschlossen ist. Der Eingangsanschluß Tm der
Modem-Einheit MOD ist ein Eingang, auf dessen Ansteuerung mit einem "1"-Signal hin die betreffende Modem-
Einheit in einen sogenanten Trainingszustand bzw.
Einstellzustand gelangt, in welchem über die Zweidraht-
Übertragungsleitung L1 ein ganz bestimmtes Bitmuster
an die mit der betrachteten Datenübertragungseinrichtung
verbundene weitere Datenübertragungseinrichtung  abgegeben wird. Das betreffende Bitmuster, das beispielsweise
aus einer Folge von Binärzeichen "0" und damit abwechselnd auftretenden Binärzeichen "1" bestehen kann,
dient in der erwähnten weiteren Datenübertragungseinrichtung dazu, den in dieser enthaltenen, vorzugsweise adaptiv  arbeitenden Entzerrer einzustellen.

Von einem Ausgangsanschluß Ts gibt die in FIG 2 dargestellte Modem-Einheit MOD eine bestimmte Zeitspanne
nach Beginn der Übertragung des erwähnten Bitmusters
über die Zweidraht-Übertragungsleitung L1 ein "1"-Aus-
gangssignal ab.Diese Zeitspanne hängt von der Dauer der
Einstellung des der betreffenden Modem-Einheit MOD
zugehörigen Entzerrers durch das erwähnte Bitmuster
ab, welches von einer anderen Datenübertragungseinrichtung her zugeführt wird bzw. ist.  Das erwähnte
"1"-Ausgangssignal - welches den erfolgreichen Abschluß
des Einstellens des zugehörigen Entzerrers angibt - wird
dem Eingang einer Zeitschaltung Zs zugeführt, die ausgangsseitig  mit dem invertierenden Sperreingang des
Sperrgliedes G2 und mit dem Rücksetzeingang R des
bistabilen Kippgliedes FF verbunden ist. Normalerweise,
d.h. im Ruhezustand, gibt die betreffende Zeitschaltung
Zs ausgangsseitig ein "0"-Signal ab. Wenn jedoch der
Zeitschaltung Zs eingangsseitig ein "1"-Signal zugeführt
wird, so gibt sie ausgangsseitig nach Ablauf der ihr
eigenen Verzögerungszeit ein "1"-Signal ab. Das

Auftreten eines derartigen "1"-Signals bewirkt zum einen, daß das Sperrglied G2 gesperrt ist und daß zum anderen das bistabile Kippglied FF in seinen Rücksetzzustand gelangt Im Rücksetzzustand des bistabilen Kippgliedes FF wird der Steueranschluß Tm der Modem-Einheit MOD nicht weiter angesteuert. Damit hört dann die Abgabe des erwähnten Bitmuster von der Modem-Einheit über die Zweidraht-Übertragungsleitung L1 auf. Dies trifft auch für den Fall zu, daß noch von dem Steuerausgang $\overline{Sync}$ der zugehörigen digitalen Übertragungseinrichtung DUE weiterhin ein den Ausfall des Synchronisationszustands anzeigendes "1"-Signal abgegeben wird. Durch die Zeitschaltung Zs wird, wie dies noch ersichtlich werden wird, das Auftreten eines Blockierungszustands bei zwei miteinander verbundenen und im Einstellbetrieb befindlichen Datenübertragungseinrichtungen vermieden.

Die Zeitschaltung Zs wird hinsichtlich ihrer Verzögerungszeit und damit hinsichtlich der Dauer des von ihr auf entsprechende Ansteuerung hin jeweils abgegebenen "1"-Ausgangssignals so bemessen sein, daß bei einwandfreier Übertragungsstrecke zwischen den beiden miteinander verbundenen Datenübertragungseinrichtungen davon ausgegangen werden kann, daß der Synchronisationszustand in der jeweils anderen Daten- übertragungseinrichtung hergestellt bzw. wieder herge- stellt ist, und zwar durch eine während der betreffenden Dauer erfolgende Datensignalübertragung zwischen den beiden Datenübertragungseinrichtungen.

Bei den vorstehenden Erläuterungen ist lediglich eine der miteinander verbundenen Datenübertragungseinrichtungen, nämlich die Datenübertragungseinrichtung A gemäß FIG 1 in ihrem Aufbau näher erläutert worden.

Die mit dieser Datenübertragungseinrichtung verbundene
andere Datenübertragungseinrichtung kann im Grunde
genommen wie in FIG 2 gezeigt aufgebaut sein. Es ist
aber auch möglich, daß die betreffende andere Datenübertragungseinrichtung - das wäre im Falle der
in FIG 1 gezeigten Schaltungsanordnung die Datenübertragungseinrichtung B - einfacher aufgebaut ist als
dies die FIG 2 zeigt. So könnte in der Datenübertragungseinrichtung B ohne das Sperrglied G2, das
bistabile Kippglied FF und die Zeitschaltung Zs ausgekommen werden; in diesem Falle wäre der Steuerausgang $\overline{Sync}$ der zugehörigen digitalen Übertragungseinrichtung DUE direkt mit dem Eingang Tm der zugehörigen Modem-Einheit MOD verbunden. In FIG 2 ist in diesem
Zusammenhang ein Umschalter angedeutet, dessen beweglicher Anschluß c mit dem Eingang Tm der Modem-Einheit
MOD verbunden ist und der mit einem feststehenden Anschluß a mit dem Q-Ausgang des bistabilden Kippgliedes
FF und mit seinem feststehenden Anschluß b mit dem
Steueranschluß bzw.-Ausgang $\overline{Sync}$ der zugehörigen digtalen Übertragungseinrichtung DUE verbunden ist.
Im Falle der Datenübertragungseinrichtung A kann der
betreffende Umschalter in der aus FIG 2 ersichtlichen
Schalterstellung stehen. Im Falle der Datenübertragungseinrichtung A kann der betreffende Umschalter in seiner
anderen Schalterstellung stehen, in der die Anschlüsse c
und b miteinander verbunden sind.

Neben den bisher betrachteten Verbindungen zwischen der
digitalen Übertragungseinrichtung DUE und der mit dieser
verbundenen Modem-Einheit MOD gibt es noch zwei weitere
Verbindungen, auf die nunmehr kurz eingegangen wird.
Bei der einen Verbindung handelt es sich um die Verbindung zwischen dem Pegelüberwachungsausgang Pu der Modem-
Einheit MOD und einem Eingangsanschluß ET dieser Modem-Einheit. Das über diese Verbindung dem Eingangsanschluß ET der Modem-Einheit MOD jeweils zugeführte Signal kann als Steuersignal dienen, mit dessen Hilfe entweder in einem schnellen Einstell-Betrieb (sogenannter Trainings-Mode) mit mit hoher Übertragungsrate auftretenden Einstellsignalen oder im langsamen Einstellbetrieb mit entsprechend langsam auftretenden Einstellsignalen gearbeitet wird. Die betreffenden Einstelsignale werden - wie oben bereits erwähnt - über die Zweidraht-Übertragungsleitung L1 abgegeben, um gewünschte Einstellvorgänge in einer weiteren Datenübertragungseinrichtung zu bewirken.

Die andere in FIG 2 noch dargestellte Verbindung ist durch eine gestrichelte Linie angedeutet. Sie verläuft zwischen dem Steuerausgang $\overline{\text{Sync}}$ der digitalen Übertragungseinrichtung DUE und dem Eingang ET der zugehörigen Modem-Einheit MOD. Diese Verbindung ist dabei alternativ zu der zuvor betrachteten Verbindung zwischen den Anschlüssen Pu und ET der betreffenden Modem-Einheit MOD vorhanden. Über die Verbindung zwischen dem Steuerausgang $\overline{\text{Sync}}$ der digitalen Übertragungseinrichtung DUE und dem Eingang ET der zugehörigen Modem-Einheit kann in entsprechender Weise wie zuvor erläutert eine Umsteuerung des Einstellbetriebs vorgenommen werden.

Nachdem zuvor der Aufbau der in FIG 2 dargestellten Schaltungsanordnung erläutert worden ist, sei nunmehr kurz die Wirkungsweise der betreffenden Schaltungsanordnung näher betrachtet. Dabei wird davon ausgegangen, daß die in FIG angedeuteten Datenübertragungseinrichtungen A, B jeweils in der aus FIG 2 ersichtlichen Weise aufgebaut sind. Wenn bei einer derartigen Anordnung die Datenübertagungseinrichtungen in Betrieb zu setzen sind, dann laufen folgende Vorgänge ab. Zunächst gibt die digiale Übertragungseinrichtung DUE jeder der beiden Datenübertragungseinrichtungen von ihrem Steuerausgang $\overline{\text{Sync}}$ ein das Fehlen eines Synchronisationszustands anzeigndes "1" Signal ab. Dies hat in beiden
Datenübertragungseinrichtungen A und B zur Folge, daß
die jeweilige zugehörige Modem-Einheit MOD veranlaßt
wird, in dem Einstell- bzw. Trainings-Betrieb überzugehen, in welchem der jeweils anderen Datenübertragungseinrichtung eine zur Einstellung dienende Bitfolge
übertragen wird. Die Datenübertragungseinrichtung A
sendet also diese Bitfolge über die Zweidraht-Übertragungsleitung L1 aus und empfängt im vorliegenden Fall
eine entsprechende Bitfolge über die Zweidraht-Übertragungsleitung L2. Die jeweilige Modem-Einheit gibt außerdem nach Ablauf der oben erwähten Zeitspanne von ihrem
Ausgang Ts ein "1"-Signal ab, welches der jeweils zugehörigen Zeitschaltung Zs zugeführt wird.

In der Datenübertragungseinrichtung A bewirkt die über
die Zweidraht-Übertragungsleitung L2 aufgenommene Bitfolge die Einstellung eines in der zugehörigen
Modem-Einheit MOD enthaltenen Entzerrers. Nach erfolgter Einstellung dieses Entzerrers beginnt die Datenübertragungseinrichtung B mit der Übertragung von Datensignalen, die in der digitalen Übertragungseinrichtung
DUE der Daenübertragungseinrichtung A aufgenommen und
als Signale ausgewertet werden, die kennzeichnend sind
für das Vorliegen eines Synchronisationszustandes. Die
betreffenden Datensignale werden von der digitalen Übertragungseinrichtung DUE der Datenübertragungseinrichtung
A an das/die mit dieser verbundenen Datenendgerät(e)
weitergeleitet. Außerdem gibt die betrachtete Übertragungseinrichtung DUE nunmehr von ihrem Steuerausgang
$\overline{\text{Sync}}$ ein "0"-Ausgangssignal ab.Damit kann  das Sperrglied
G2 nicht mehr im  übertragungsfähigen Zustand verbleiben
bzw. in diesen gelangen. Das  vom Ausgang der zugehörigen Zeitschaltung Zs inzwischen abgegebene "1"-Signal bewirkt das Zurücksetzen des mit ihm verbundenen Kippgliedes FF , nachdem so viel Zeit verstrichen ist, daß von der Abwicklung der erforderlichen Einstellvorgänge in der Datenübertragungseinrichtung B ausgegangen werden kann. Dies bedeutet, daß die Datenübertragungseinrichtung A mit der Abgabe ihrer Einstellsignale bereits aufgehört hat und daß nunmehr auch die Datenübertragungseinrichtung A Datensignale an die Datenübertragungseinrichtung B aussenden kann.

Nimmt man nun einmal an, daß bei der in FIG 1 angedeuteten Konfiguration eine Unterbrechung oder Störung der Übertragungsleitung Ll auftritt, so laufen folgende Vorgänge ab. Die Datenübertragungseinrichtung B erkennt zunächst das Ausbleiben von Datensignalen und meldet dies durch Abgabe eines Synchronisieralarmsignals, welches als "1"-Signal am Steuerausgang $\overline{Sync}$ der zugehörigen digitalen Übertragungseinrichtung DUE auftritt. Dieses "1"-Signal bewirkt, daß von der Modem-Einheit MOD der Datenübertragungseinrichtung B wieder Einstellsignale an die Datenübertragungseinrichtung A ausgesendet werden. Da diese Einstellsignale nicht kennzeichnend sind für das Vorliegen des Synchronisationszustandes, beginnt die Datenübertragungseinrichtung A mit der Abgabe entsprechender Einstellsignale an die Datenübertragungseinrichtung B. In dieser Datenübertragungseinrichtung B kann jedoch keine entsprechende Einstellung erfolgen, da annahmegemäß die Übertragungsleitung Ll unterbrochen oder gestört ist.

Unter Zugrundelegung des in FIG 2 dargestellten Aufbaus wird die Datenübertragungseinrichtung A in dem gerade angenommenen Fall nach Ablauf einer bestimmten Zeitspanne seit Auftreten eines "1"-Signals am Steueraus-

gang Sync ihrer zugehörigen Übertragungseinrichtung DUE mit der Aussendung von Einstellsignalen aufhören und mit der Datensignalübertragung zu beginnen versuchen. Die dazu führenden Vorgänge entsprechen völlig den im Zusammenhang mit der Inbetriebsetzung bzw. mit dem Beginnen der Datenübertragung oben erläuterten Vorgängen. In der Datenübertragungseinrichtung B wird in entsprechender Weise nach Ablauf der oben erwähnten Zeitspanne mit der Abgabe von Einstellsignalen aufgehört. Da jedoch in der Datenübertragungseinrichtung B weiterhin ein Synchronisationsalarmsignal vorliegt, wird die zugehörige Modem-Einheit MOD erneut bzw. weiterhin die Einstellsignale abgeben, womit die Datenübertragungseinrichtung A wiederum zur Abgabe von Einstellsignalen veranlaßt wird.

Erst wenn die Verbindung zwischen den beiden Datenübertragungseinrichtungen A und B wieder hergestellt bzw. intakt ist, kann mit der Datensignalübetragung tatsächlich begonnen werden. Lediglich in diesem Falle kann das Synchronisationssignal "1" am Steuerausgang $\overline{\text{Sync}}$ der jeweiligen Übertragungseinrichtung DUE verschwinden.

Den vorstehend erläuterten Vorgängen völlig entsprechende Vorgänge laufen dann ab, wenn in einer der miteinander verbundenen Datenübertragungseinrichtungen eine direkte Verbindung zwischen dem Steuerausgang $\overline{\text{Sync}}$ der zugehörigen Übertragungseinrichtung DUE und dem Eingang Tm der zuzgehörigen Modem-Einheit MOD vorhanden ist. Diese direkte Verbindung, die entweder durch einen Umschalter - wie oben erläutert - oder durch eine Brücke zwischen den Schaltungspunkten b und c gemäß FIG 2 realisiert sein kann, hat dann zur Folge, daß die diese Verbindung aufweisende Datenübertragungseinrichtung so lange im Einstellbetrieb bleibt und damit so lange Einstellsignale aussendet, wie vom Steuerausgang $\overline{\text{Sync}}$ ihrer zugehörigen Übertragungseinrichtung DUE ein für das Vorliegen eines Synchronisationsausfalls kennzeichnendes "1"-Signal vorhanden ist. Geht man in diesem Zusammenhang unter Zugrundelegung der in FIG 1 dargestellten Konfiguration davon aus, daß die Datenübertragungseinrichtung A den aus FIG 2 ersichtlichen tatsächlichen Aufbau hat und daß die Datenübertragungseinrichtung B die zuvor betrachtete direkte Verbindung zwischen ihrer Übertragungseinrichtung DUE und ihrer Modem-Einheit MOD aufweist und nimmt man ferner einmal an, daß die Übertragungsleitung L1 unterbrochen oder gestört ist, so wird die Datenübertragungseinrichtung B fortwährend Einstellsignale (Trainings-Signale) an die Datenübertragungseinrichtung A aussenden. Die Datenübertragungseinrichtung A wird nach durch die Verzögerungszeit der Zeitschaltung Zs gegebenen zeitlichen Abständen versuchen, nach Beendigung der Abgabe von Einstellsignalen Datensignale an die Datenübertragungseinrichtung B zu übertragen. Diese Datensignale kommen bei der Datenübertragungseinrichtung B jedoch nicht an, weshalb diese ihre Aussendung von Einstellsignalen weiterhin fortsetzt. Damit wird in der Datenübertragungseinrichtung A weiterhin das Vorliegen eines Synchronisationsausfalls erkannt, womit die geschilderten Vorgänge weiterhin ablaufen. Erst wenn die Datenübertragungseinrichtung B ihr über die Übertragungsleitung L1 zugeführte Datensignale ordnungsgemäß aufgenommen hat und damit das Vorliegen eines Synchronisationszustandes erkannt hat, vermag sie Datensignale an die Datenübertragungseirichtung A zu übertragen, die daraufhin ebenfalls das Vorliegen des Synchronisationszustands erkennt.

**0 168 829**

Abschließend sei noch angemerkt, daß die in FIG 2 angedeutete Schaltungsanordnung zwischen der digitalen Übertragungseinrichtung DUE und der zugehörigen Modem-Einheit MOD in Form von diskreten Schaltungselementen dargestellt bzw. realisiert ist. Es sei jedoch darauf hingewiesen, daß die betreffende Schaltungsanordnung ebenso mit Hilfe eines Mikroprozessors realisiert sein kann.

Patentansprüche

1. Schaltungsanordnung zur Steuerung der Inbetriebsetzung bzw. der Wiederinbetriebsetzung zweier miteinander zu verbindender bzw. bereits verbundener Datenübertragungseinrichtungen (A, B), die jeweils über eine Modem-Einheit (MOD) miteinander zu verbinden bzw. verbunden sind und die mit Datensignale abgebenden/aufnehmenden Datengeräten jeweils über eine Übertragungssteuereinrichtung (DUE) an ihrer zugehörigen Modem-Einheit (MOD) angeschlossen sind, mittels eines gesonderten Einstellsignals, welches in der dieses Einstellsignal aufnehmenden Datenübertragungseinrichtung zur Einstellung eines insbesondere adaptiv arbeitenden Entzerrers dient.

d a d u r c h   g e k e n n z e i c h n e t ,
daß in zumindest einer der beiden miteinander zu verbindenden bzw. verbundenen Datenübertragungseinrichtungen (A, B) der Ausfall des Synchronisationszustandes infolge einer fehlenden oder gestörten Datensignalübertragung von der jeweils anderen Datenübertragungseinrichtung (B bzw. A) her dazu herangezogen wird,
das betreffende Einstellsignal lediglich während einer vorgegebenen Zeitspanne an die andere Datenübertragungseinrichtung (B bzw. A) abzugeben und nach Ablauf der betreffenden Zeitspanne mit der Übertragung von den Synchronisationszustand anzeigenden Signalen, insbesondere Datensignalen, zu beginnen,
und daß die betreffende andere Datenübertragungseinrichtung (B bzw. A) entweder nach Ablauf einer der genannten Zeitspanne entsprechenden Zeitspanne oder nach Empfang der den Synchronisationszustand anzeigenden Signale von der genannten einen Datenübertragungseinrichtung (A bzw. B) her mit der Übertragung von den Synchronisationszustand anzeigenden Signalen, insbesondere von Datensignalen, an die genannte eine Datenübertragungseinrichtung (B bzw. A) beginnt.

2. Schaltungsanordnung nach Anspruch 1,
d a d u r c h   g e k e n n z e i c h n e t ,
daß an einem bei Fehlen des Synchronisationszustandes ein bestimmtes Ausgangssignal ("1") abgebenden Steuerausgang ($\overline{Sync}$) der Übertragungssteuereinrichtung (DUE) zumindest einer der beiden Datenübertragungseinrichtungen (A, B) der Setzeingang eines
bistabilen Kippgliedes (FF) angeschlossen ist, welches
ausgangsseitig an einem Steuereingang (Tm) der zugehörigen Modem Einheit (MOD) angeschlossen ist, die auf ihre
Ansteuerung an dem betreffenden Steuereingang (Tm) hin
mit der Abgabe des genannten Einstellsignals beginnt,
und daß die Modem-Einheit (MOD) mit einem auf die erfolgreiche Beendigung eines Einstellvorgangs in der anderen
Datenübertragungseinrichtung (B bzw. A) ein bestimmtes
Ausgangssignal ("1") abgebenden Ausgang (Ts) über eine
Zeitschaltung (Zs) am Rücksetzeingang des bistabilen
Kippgliedes (FF) abgeschlossen ist.

3. Schaltungsanordnung nach Anspruch 2,
d a d u r c h   g e k e n n z e i c h n e t ,
daß zwischen dem Steuerausgang ($\overline{Sync}$) der genannten
Übertragungssteuereinrichtung (DUE) und dem Setzeingang (S) des bistabilen Kippgliedes (FF) ein Sperrglied (G2) mit seinem nichtinvertierenden Eingang bzw.
mit seinem Ausgang liegt und daß der invertierende
Eingang des betreffenden Sperrgliedes (G2) am Ausgang
der Zeitschaltung (Zs) angeschlossen ist.

4. Schaltungsanordnung nach einem der Ansprüche 1 bis 3,
d a d u r c h   g e k e n n z e i c h n e t ,
daß der Steuerausgang ($\overline{Sync}$) der genannten Übertragungssteuereinrichtung (DUE) mit dem genannten Steuereingang (Tm) der Modem-Einheit (MOD) direkt verbindbar
ist.

5. Schaltungsanordnung nach einem der Ansprüche 1 bis 4,
d a d u r c h   g e k e n n z e i c h n e t ,
daß der Steuerausgang $\overline{(Sync)}$ der Übertragungssteuereinrichtung (DUE) mit einem auf seine Ansteuerung
einen Einstellbetrieb mit einer ersten oder einer
davon verschiedenen zweiten Rate bewirkenden gesonderten Steuereingang (ET) der zugehörigen Modem-Einheit verbunden ist.

6. Schaltungsanordnung nach einem der Ansprüche 1 bis 4,
d a d u r c h   g e k e n n z e i c h n e t ,
daß der zur Ansteuerung des Einstellbetriebs mit der
ersten oder zweiten Rate dienende gesonderte Steuereingang (ET) der Modem-Einheit (MOD) mit einem bei Vorliegen eines bestimmten Mindestpegels auf einer Signale zu
der betreffenden Modem-Einheit (MOD) übertragenden Übertragungsleitung (L2) ein bestimmtes Ausgangssignal ("1")
führenden Pegelüberwachungsausgang (Pu) der betreffenden
Modem-Einheit (MOD) verbunden ist.

7. Schaltungsanordnung nach Anspruch 6,
d a d u r c h   g e k e n n z e i c h n e t ,
daß an dem Pegelüberwachungsausgang (Pu) der Modem-Einheit (MOD) der eine Eingang eines zwei Eingänge und
einen Ausgang aufweisenden UND-Gliedes (G1) angeschlossen ist, welches mit seinem anderen Eingang an
einem der Modem-Einheit (MOD) zugeführte Signale abgebenden Signalausgang (EDm) der betreffenden Modem-
Einheit (MOD) und mit seinem Ausgang an einem Signaleingang (EDu) der zugehörigen Übertragungsrichtung (DUE)
angeschlossen ist.

1 / 1

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 009 356 (BORYSIEWICZ) * Spalte 5, Zeile 66 - Spalte 7, Zeile 58; Spalte 13, Zeilen 40-48; Spalte 20, Zeile 66 - Spalte 21, Zeile 3; Spalte 22, Zeilen 57-60 * | 1-3 | H 04 L 25/03 H 04 L 11/15 |

-----

RECHERCHIERTE SACHGEBIETE (Int. Cl.4)

H 04 L

Der vorliegende Recherchenbericht wurde für alle Patentansprüche erstellt.

| Recherchenort DEN HAAG | Abschlußdatum der Recherche 06-09-1985 | Prüfer GEISLER J.A.R. |
|---|---|---|